(19) Europäisches Patentamt
European Patent Office
Office européen des brevets

(11) EP 0 612 613 B1

(12) **EUROPÄISCHE PATENTSCHRIFT**

(45) Veröffentlichungstag und Bekanntmachung des Hinweises auf die Patenterteilung:
**20.10.1999 Patentblatt 1999/42**

(51) Int. Cl.$^6$: **B32B 27/18**, B32B 27/32, B65D 65/40

(21) Anmeldenummer: **94100559.7**

(22) Anmeldetag: **17.01.1994**

(54) **Biaxial orientierte Polypropylen-Mehrschichtfolie, Verfahren zu ihrer Herstellung und ihre Verwendung**

Biaxially oriented multilayered polypropylene film, process of preparation and use thereof

Pellicule multicouche de polypropylène biaxiallement orientée, procédé pour sa fabrication et son utilisation

(84) Benannte Vertragsstaaten:
**BE DE ES FR GB IT NL**

(30) Priorität: **25.01.1993 DE 4301897**
**25.01.1993 DE 4301896**

(43) Veröffentlichungstag der Anmeldung:
**31.08.1994 Patentblatt 1994/35**

(73) Patentinhaber:
**Hoechst Trespaphan GmbH**
**66539 Neunkirchen (DE)**

(72) Erfinder:
- **Schuhmann, Detlef Erich, Dr.**
  **D-65399 Kiedrich (DE)**
- **Dries, Thomas, Dr.**
  **D-55270 Schwabenheim (DE)**
- **Wilhelm, Adolf**
  **D-65199 Wiesbaden (DE)**
- **Scheidecker, Dieter**
  **D-65343 Eltville (DE)**
- **Lohmann, Harald**
  **D-66539 Neunkrichen (DE)**
- **Murschall, Ursula, Dr.**
  **D-55283 Nierstein (DE)**
- **Peiffer, Herbert, Dr.**
  **D-55126 Mainz (DE)**
- **Schlögl, Gunter, Dr.**
  **D-65779 Kelkheim (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 027 586**
**EP-A- 0 321 843**
**EP-A- 0 447 652**
**EP-A- 0 463 517**
**DE-A- 3 611 341**

EP 0 612 613 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine opake coextrudierte, biaxial orientierte Folie, umfassend eine Basisschicht, die Polypropylen enthält, und mindestens eine Deckschicht, enthaltend olefinische Polymere.

Die Erfindung betrifft ferner ein Verfahren zur Herstellung der Folie sowie ihre Verwendung.

Den im Stand der Technik bekannten Folien haftet der Nachteil an, daß sie schlechte antistatische Eigenschaften und eine sehr schlechte Entstapelbarkeit aufweisen. Folien finden neben ihrer üblichen Verwendung als Verpackungsfolie auch Anwendung als Etikettenmaterial. Hierzu wird die Folie in Zuschnitte geeigneter Größe geschnitten und übereinandergestapelt. Beim Etikettierprozeß wird der einzelne Folienzuschnitt diesem Stapel maschinell entnommen und in den Etikettierprozeß geführt. Bei herkömmlichen Folien kommt es bei diesem maschinellen Entstapelungsvorgang häufig zu Problemen, wenn die Maschine häufig mehr als ein Blatt greift. Weiterhin weisen die herkömmlichen Folien eine schlechte Antistatik auf, was zum einen zu Verunreinigungen der Oberfläche durch Staubansammlungen führt, aber auch aufgrund der großen Oberfläche der Folie bei extremer Aufladung eine Gefahrenquelle darstellt, z. B. durch plötzliche Entladungen in einem Druckwerk, die bis hin zu Explosionen von Lösungsmitteln führen können.

Die im Stand der Technik bekannte Ausrüstung der Basisschicht mit Antistatika verbessert die antistatischen Eigenschaften der Folien ungenügend. Die Einarbeitung entsprechender Additive in die Deckschicht führt beim Produktionsprozeß durch Ausdampfungen zu Problemen. Auch diese Folien sind noch nicht ausreichend antistatisch.

Opake Folien sind allgemein bekannt. So wird beispielsweise in der EP-A-0 180 087 eine fünfschichtige siegelfähige Folie beschrieben, die eine vakuolenhaltige Basisschicht, hergestellt aus Propylenhomopolymer und Calciumcarbonat, aufweist, eine Zwischenschicht aus Propylenhomopolymer und Kohlenwasserstoffharz hat und deren siegelfähige Deckschichten aus Propylen/Ethylen-Copolymeren bestehen. Bedingt durch die dicke Zwischenschicht aus Polypropylen und Kohlenwasserstoffharz weist die Folie bessere mechanische Eigenschaften sowie einen höheren Glanz auf als Folien nach dem Stand der Technik. Daneben ist die Folie infolge der Siegelschichten aus Propylen/Ethylen-Copolymeren gut coronabehandelbar. Verbesserungswürdig ist die Folie im Hinblick auf ihre antistatischen Eigenschaften und ihre Entstapelbarkeit.

Aus der EP-A-0 312 226 ist eine mehrschichtige opake Folie bekannt, bei der eine Deckschicht aus einem gut bedruckbaren (printable) Polymer besteht, die eine Zwischenschicht aus Propylenhomopolymeren aufweist und eine Kernschicht hat, die vakuolenhaltig ist. Die Folie soll sich - gesehen von der Homopolymerseite aus - durch einen guten Glanz auszeichnen. Bedingt durch die angegebenen Schichtdickenverhältnisse ist der Oberflächenglanz und die Opazität bzw. der Weißgrad verbesserungswürdig.

In der EP-A-0 408 971 wird eine Folie mit hohem Weißgrad und hoher Opazität beschrieben, die gut bedruckbar ist und glänzend sein soll. Die Folie weist eine wolkige Struktur auf, die wahrscheinlich von der kleinen Korngröße des verwendeten Calciumcarbonats herrührt. Die bevorzugt angegebene Teilchengröße von 1,0 µm hat eine schlechte Dispergierbarkeit im Polymeren zur Folge. Außerdem führt der erhöhte Feinanteil der Körner zu einer verringerten Opazität, da hierdurch keine Vakuolen entstehen.

In der EP-A-0 234 758 und in der EP-A-0 225 685 werden gut bedruckbare opake Folien beschrieben. Aufgrund der Oberflächenbeschaffenheit sind die Folien jedoch durch ein sehr mattes Aussehen geprägt.

EP-A-0 447 652 beschreibt eine coextrudierte, vorzugsweise biaxial gerechte Polypropylenfolie deren Deckschichten gesättigte aliphatische N,N-Bis-(hydroxy-$C_{1-4}$-alkyl)-$C_{10-20}$-alkylamine als Antistatika enthalten können und welche als Antiblockmittel ein Polymer auf Basis Polymethacrylsäureisobutylester und Polymethacrylsäuremethylester enthält. Das Antiblockmittel ist in einer Menge von 700 bis 5000 ppm, entsprechend 0,07 bis 0,5%, enthalten. Die Folie kann einoder mehrschichtig sein und enthält im Falle von mehrschichtigen Ausführungsformen das Antiblockmittel immer in der Außenschicht. Gegebenenfalls können die Schichten der Folie mit weiteren üblichen Additiven und Hilfsmitteln ausgerüstet sein.

DE 36 11 341 beschreibt eine opake biaxial orientierte Folie aus thermoplastischem Kunststoff für den Bonbondreheinschlag. Die Folie besteht aus einer Polymermischung die 40 bis 60 Gew.-% Polypropylen und 35 bis 55 Gew.-% Polystyrol und 5 bis 15 Gew.-% Füllstoffe enthält. Die Schrift erwähnt, daß die Basisschicht und die Deckschichten mit Antistatika ausgerüstet sein können.

EP-A-0 321 843 beschreibt eine opake Folie mit inhärenter Delaminierungsstabilität. Die Folie weißt eine opake Kernschicht und zwei transparente Deckschichten auf. Die Kernschicht enthält eine Mischung aus 45 bis 90 Gew.-% Propylenpolymer und 5 bis 25 Gew.-% inerten partikelförmigen Füllstoff und 5 bis 30 Gew.-% verträgliches Kohlenwasserstoffharz. Die Schrift lehrt, daß die Deckschichten von partikelförmigen Zusatzstoffen und Harz frei sind.

EP-A-0 027 586 beschreibt eine siegelbare Mehrschichtfolie aus einer Polypropylen-Basisschicht und einer Siegelschicht aus Ethylenhomopolymer oder Ethylencopolymer. Die Siegelschicht enthält eine Additivkombination aus einem langkettigen aliphatischen Amin, einem dispergierten thermoplastischen Polymer und einem Polydialkylsiloxan. Das dispergierte thermoplastische Polymer ist in einer Menge von 0,1 bis 0,7 Gew.-% enthalten. Die Folie zeichnet sich durch eine ausgezeichnete Transparenz aus.

Die Aufgabe der vorliegenden Erfindung bestand darin, die Nachteile der im Stand der Technik vorbeschriebenen Folien zu vermeiden. Insbesondere soll eine Mehrschichtfolie zur Verfügung gestellt werden, die durch eine sehr gute Entstapelbarkeit und eine hervorragende Antistatik ausgezeichnet ist. Gleichzeitig soll die Folie einen hohen Glanz und mindestens eine Deckschicht mit guten Siegeleigenschaften, insbesondere mit einem großen Siegelbereich und einer guten Siegelnahtfestigkeit, aufweisen.

Für die opake Folie ist eine hervorragende Opazität wünschenswert, und aus ökonomischen Gründen soll diese opake Folie eine hohe Flächenausbeute bieten und preiswert herzustellen sein.

Erfindungsgemäß wird diese Aufgabe gelöst durch eine Folie der eingangs genannten Gattung, wobei die Deckschicht 4-8 Gew.-%, bezogen auf das Gewicht der Deckschicht anorganische und/oder organische Partikel und tertiäres aliphatisches Amin der Formel I

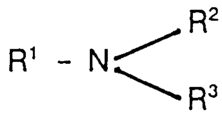

worin

| | |
|---|---|
| $R^1$ | einen ungesättigten aliphatischen Rest mit mindestens 18 C-Atomen oder einen gesättigten Alkylrest mit 8 bis 26 C-Atomen bedeutet und |
| $R^2$ und $R^3$ | identisch oder verschieden sind und $R^4$-$CH_2OH$ bedeuten, worin $R^4$ einen gesättigten $C_1$-$C_6$-Alkylrest bedeutet, |

enthält.

Die Kernschicht der erfindungsgemäßen Mehrschichtfolie enthält im wesentlichen ein Propylenpolymer oder eine Polypropylenmischung.

Das Propylenpolymere enthält zum überwiegenden Teil (mindestens 90 %) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-$\alpha$-Olefinen mit einem $\alpha$-Olefingehalt von 10 Gew.-% oder weniger stellen bevorzugte Propylenpolymere für die Kernschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735). Des weiteren ist eine Mischung aus den genannten Propylenhomo- und/oder -copolymeren und/oder anderen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Gegebenenfalls kann das in der Kernschicht eingesetzte Polypropylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

| | |
|---|---|
| $MFI_1$ = | Schmelzflußindex des Polypropylenpolymeren vor dem Zusatz des organischen Peroxids |
| $MFI_2$ = | Schmelzflußindex des peroxidisch abgebauten Polypropylenpolymeren |

Im allgemeinen liegt der Abbaufaktor A des eingesetzten Polypropylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Opake Folie enthält in der Basisschicht Füllstoffe in einer Menge von 3 bis 20 Gew.-%, bezogen auf die Basisschicht.

Bei diesen Füllstoffen handelt es sich um die üblichen anorganischen und/oder organischen, mit Polypropylen

unverträglichen Materialien. Anorganische Füllstoffe sind bevorzugt, insbesondere geeignet sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Als organische Füllstoffe kommen die üblicherweise verwendeten, mit dem Polymeren der Basisschicht unverträglichen Polymeren in Frage, insbesondere solche wie Polyester, Polystyrole, Polyamide, halogenierte organische Polymere, wobei Polyester wie beispielsweise Polybutylenterephthalate bevorzugt sind. Die Füllstoffmenge der Basisschicht, insbesondere die des $CaCO_3$, beträgt erfindungsgemäß 3 bis 20 Gew.-%, vorzugsweise 10 bis 15 Gew.-%, bezogen auf das Gesamtgewicht der Folie. Die mittlere Teilchengröße, insbesondere die des $CaCO_3$, liegt im Bereich von 1 bis 5 µm, vorzugsweise im Bereich von 1,5 bis 4 µm.

Es wurde gefunden, daß auch schon mit einem relativ geringen Füllstoffgehalt von 9 bis 13 Gew.-% eine Dichte von kleiner 0,7 $g/cm^3$ zu erzielen ist. Im allgemeinen liegt die Dichte der erfindungsgemäßen Folie im wünschenswerten Bereich von 0,4 bis 0,6 $g/cm^3$.

Neben dem bevorzugten Calciumcarbonat ist als weiteres Kernschichtadditiv Titandioxid geeignet, welches gegebenenfalls in Kombination mit $CaCO_3$ in der Basisschicht eingesetzt wird. In bevorzugter Ausführungsform bestehen die Titandioxidteilchen zu mindestens 95 Gew.-% aus Rutil. Die Titandioxidteilchen werden bevorzugt mit einem Überzug aus anorganischen Oxiden eingesetzt, wie er üblicherweise als Überzug für $TiO_2$-Weißpigment in Papieren oder Anstrichmitten zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. $TiO_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den $TiO_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, bezogen auf 100 g $TiO_2$-Teilchen, enthalten. Der Überzug wird auf die Teilchen in wäßriger Suspension aufgebracht. Als besonders vorteilhaft hat es sich erwiesen, wenn die $TiO_2$-Teilchen mit $Al_2O_3$ oder mit $Al_2O_3$ und Polydimethylsiloxan beschichtet sind.

Der Anteil an Titandioxid in der Kernschicht - sofern vorhanden - beträgt 1 bis 9 Gew.-%, bevorzugt 3 bis 5 Gew.-%, bezogen auf das Gesamtgewicht der Folie. Die mittlere Teilchengröße ist sehr klein und liegt vorzugsweise bei 0,15 bis 0,30 µm, wobei sich die angegebene Teilchengröße auf die beschichteten Teilchen bezieht.

$TiO_2$ findet dann bevorzugt zusätzlich zu $CaCO_3$ Verwendung in der Basisschicht, wenn ein weiß-opakes Aussehen der Folie gewünscht ist. Üblicherweise zeigen Folien mit einer nur füllstoffhaltigen Basisschicht ein trübes, sogenanntes opakes Aussehen, welches durch Streuprozesse an den Vakuolen der Basisschicht entsteht. Davon zu unterscheiden ist ein weißes Aussehen, welches durch Einfärbungen durch Pigmente, vorzugsweise $TiO_2$, erzielt wird.

Weiterhin kann die Kernschicht gegebenenfalls ein niedermolekulares Harz enthalten, dessen Anteil 1 bis 30 Gew.-%, vorzugsweise 2 bis 10 Gew.-%, beträgt. Der Erweichungspunkt des Harzes liegt zwischen 130 und 180 °C (gemessen nach DIN 1995-U4, entspricht ASTM E-28), vorzugsweise zwischen 140 und 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Die Deckschicht der erfindungsgemäßen Mehrschichtfolie enthält mindestens ein olefinisches Polymer und eine Kombination von anorganischen und/oder organischen Partikeln und tertiärem aliphatischem Amin der Formel I:

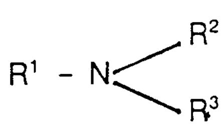

worin

$R^1$ einen ungesättigten aliphatischen Rest mit mindestens 18 C-Atomen oder einen gesättigten Alkylrest mit

8 bis 26 C-Atomen bedeutet und

$R^2$ und $R^3$ identisch oder verschieden sind und $R^4$-$CH_2OH$ bedeuten, worin $R^4$ einen gesättigten $C_1$-$C_6$-Alkylrest bedeutet.

Unter siegelfähigen olefinischen Polymeren werden im Sinne der vorliegenden Erfindung

Copolymere von

Ethylen und Propylen oder
Ethylen und Butylen oder
Propylen und Butylen oder
Ethylen und einem anderen α-Olefin mit 5 bis 10 Kohlenstoffatomen oder
Propylen und einem anderen α-Olefin mit 5 bis 10 Kohlenstoffatomen oder

Terpolymere von

Ethylen und Propylen und Butylen oder
Ethylen und Propylen und einem anderen α-Olefin mit 5 bis 10 Kohlenstoffatomen oder

eine Mischung aus zwei oder mehreren der genannten Co- und/oder Terpolymeren

verstanden.

Besonders bevorzugt enthält/enthalten die Deckschicht/en

ein Copolymeres von

Ethylen und Propylen oder
Ethylen und Butylen-1 oder
Propylen und Butylen-1 oder

ein Terpolymeres von

Ethylen und Propylen und Butylen-1 oder

eine Mischung aus zwei oder mehreren der genannten besonders bevorzugten Co- und/oder Terpolymeren,

wobei insbesondere

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder
statistische Ethylen-Propylen-Butylen-1-Terpolymere mit

einem Ethylengehalt von 1 bis 10 Gew.-%, bevorzugt 2 bis 6 Gew.-%, und
einem Butylen-1-Gehalt von 3 bis 20 Gew.-%, bevorzugt 8 bis 10 Gew.-%,

bezogen auf das Gesamtgewicht des Terpolymeren, oder
eine Mischung von einem Ethylen-Propylen-Butylen-1-Terpolymeren und einem Propylen-Butylen-1-Copolymeren

mit einem Ethylengehalt von 0,1 bis 7 Gew.-%
und einem Propylengehalt von 50 bis 90 Gew.-%
und einem Butylen-1-Gehalt von 10 bis 40 Gew.-%,

bezogen auf das Gesamtgewicht der Polymermischung,

bevorzugt sind.

Die in der Deckschicht eingesetzten vorstehend beschriebenen Copolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140 °C. Die in der Deckschicht eingesetzten Terpolymeren haben einen Schmelzflußindex im Bereich von 1,5 bis 30 g/10 min, vorzugsweise von 3 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Auch die vorstehend beschriebenen Deckschichtpolymeren können in analoger Weise, wie vorne für die Basisschicht beschrieben, peroxidisch abgebaut werden. Dabei werden grundsätzlich die gleichen Peroxide wie vorstehend beschrieben für den Abbau verwendet. Der Abbaufaktor A des/der Deckschichtpolymeren liegt im allgemeinen im Bereich von 3 bis 15, vorzugsweise 5 bis 10.

Als olefinische Polymere können grundsätzlich auch solche Homopolymere verwendet werden, wie sie vorstehend für die Basisschicht beschrieben wurden. Als Polymere können grundsätzlich auch siegelfähige Homopolymere verwendet werden. Diese siegelfähigen Homopolymeren zeichnen sich durch eine besondere Struktur und völlig neue Eigenschaften gegenüber den herkömmlichen bekannten isotaktischen, nicht siegelfähigen Homopolymeren aus. Solche Materialien werden beschrieben in DE-A-42 28 812 und EP-A-0 484 816.

Es wurde überraschenderweise gefunden, daß Deckschichten, welche in Verbindung mit einem anorganischen und/oder organischen Partikel ein ausgewähltes aliphatisches Amin der Formel I enthalten, eine hervorragende Antistatik und eine sehr gute Entstapelbarkeit aufweisen.

Tertiäre aliphatische Amine sind an sich aus dem Stand der Technik bekannt. Überraschenderweise wirken jedoch nur die Amine, welche die durch die Formel I angegebene spezielle Struktur aufweisen, in der gewünschten Weise mit den anorganischen und/oder organischen Partikeln zusammen.

Es wurde gefunden, daß die übliche Verwendung von tertiären aliphatischen Aminen als Antistatika in der Basisschicht nicht die gewünschten antistatischen Eigenschaften im erforderlichen Maße bringen. Die Verwendung von Antistatika in der Deckschicht führt zu Problemen beim Produktionsprozeß, da sich das Amin in erheblichem Maße an den Walzen ablagert, im Querstreckrahmen ausdampft und sich nur ein Bruchteil der ursprünglich eingesetzten Menge in der Folie wiederfindet. Die antistatischen Eigenschaften sind unzureichend.

Überraschenderweise treten diese Probleme bei Verwendung der ausgewählten Amine gemäß Formel I nicht auf. Es kommt trotz Einarbeitung des Additivs in die Deckschicht nicht zu Ausdampfungen im Querstreckrahmen und Ablagerungen an den Walzen. Die Konzentration des Amins in der Deckschicht entspricht der eingesetzten Menge.

Als tertiäre aliphatische Amine der Formel I sind solche bevorzugt, worin

| | |
|---|---|
| $R^1$ | einen ungesättigten aliphatischen Rest mit 18 bis 30 C-Atomen, insbesondere mit 18 bis 26 C-Atomen, oder einen gesättigten Alkylrest mit 18 bis 12 C-Atomen bedeutet und |
| $R^2$ und $R^3$ | identisch oder verschieden sind und $R^4$-$CH_2OH$ bedeuten, worin $R^4$ einen gesättigten $C_1$-$C_3$-Alkylrest bedeutet. |

Unter Alkylresten und unter aliphatischen Resten werden geradkettige oder verzweigte Kohlenwasserstoffreste verstanden.

Die Definition für $R^1$, $R^2$ und $R^3$ bedeutet im Sinne der vorliegenden Erfindung, daß neben der angegebenen Bedeutung für die Reste auch geringe Mengen, d. h. unter 10 %, bezogen auf die Gesamtmenge Amin, andere, insbesondere auch kürzere Kettenlängen vorliegen können; d. h. in einer bestimmten Menge an tertiärem aliphatischem Amin liegt eine Kettenlängenverteilung für die Alkylreste der einzelnen Substituenten vor, so daß z. B. neben $C_{18}$-Alkylresten für $R^1$ auch geringe Mengen $C_{16}$ oder $C_{14}$ für $R^1$ gefunden werden können.

Im Sinne der vorliegenden Erfindung, ist der Sättigungsgrad der Alkylreste mindestens 90 %, bevorzugt über 95 %,.

Als ganz besonders effektiv für die vorliegende Erfindung haben sich tertiäre aliphatische Amine der Formel I erwiesen, worin

| | |
|---|---|
| $R^1$ | einen einfach ungesättigten aliphatischen Rest mit 18 bis 20 C-Atomen bedeutet und |
| $R^2$ und $R^3$ | im wesentlichen $CH_2$-$OH_2OH$ bedeuten, |

und solche Amine der Formel I, worin

$R^1$ 55 bis 65 % $C_{18}$-Akyl

30 bis 40 % $C_{16}$-Alkyl
0 bis 5 % $C_{14}$-Alkyl
0 bis 1 % $C_{12}$-Alkyl

bedeutet, wobei alle Alkylreste im wesentlichen gesättigt sind, und worin $R^2$ und $R^3$ $CH_2$-$CH_2OH$ bedeuten.

Im allgemeinen enthält die Deckschicht das vorstehend beschriebene Amin der Formel I in einer Menge von 0,05 bis 2 Gew.-%, vorzugsweise 0,1 bis 1 Gew.-%, jeweils bezogen auf das Gewicht der Deckschicht.

Es ist erfindungswesentlich, daß die Deckschicht/en weiterhin 4-8 Gew.-%, bezogen auf das Gewicht der Deckschicht anorganische und/oder organische Partikel in Verbindung mit dem/den tertiären aliphatischen Amin/en enthält/enthalten.

Unter Partikeln im Sinne der Erfindung werden Teilchen verstanden, welche mit dem Deckschichtpolymeren unverträglich sind und unbeeinflußt vom Folienherstellungsprozeß in der Folie als separate Teilchen vorliegen.

Unter anorganischen Partikeln werden die üblichen anorganischen und/oder organischen, mit Polypropylen unverträglichen Materialien verstanden. Anorganische Füllstoffe sind bevorzugt, insbesondere geeignet sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Bevorzugte anorganische Partikel sind $CaCO_3$, $SiO_2$, $TiO_2$ oder Mischungen dieser Partikel. Grundsätzlich kommen als Partikel für die Deckschicht jedoch auch organische Materialien in Frage.

Die opaken Folie enthält/enthalten in der/den Deckschicht/en im allgemeinen 4 bis 8 Gew.-%, bezogen auf das Gewicht der Deckschicht, an anorganischen und/oder organischen Partikeln. Bevorzugt ist ein Partikelgehalt der Deckschicht von 4 bis 6 Gew.-%. Die mittlere Teilchengröße liegt zwischen 1 bis 6 µm, insbesondere 2 bis 4 µm, wobei Teilchen mit einer kugelförmigen Gestalt bevorzugt sind. In einer ganz besonders vorteilhaften Ausführungsform der Erfindung enthalten Basis- und Deckschicht gleiche Zusatzstoffe, vorzugsweise $CaCO_3$ und/oder $TiO_2$. Dies ermöglicht die problemlose Rückführung von Folienabfall, der während der Produktion anfällt, in den Herstellungsprozeß. Grundsätzlich kommen als Partikel für die Deckschicht auch organische Materialien in Frage, wie sie vorstehend als organische Füllstoffe für die Basisschicht beschrieben werden. Aus dem Partikelgehalt der Deckschicht und dem Füllstoffgehalt der Basisschicht resultiert ein Gesamtgehalt an Füllstoffen von 5 bis 25 Gew.-%, bezogen auf das Gesamtgewicht der Folie. Bevorzugt enthält die opake Mehrschichtfolie 10 bis 15 Gew.-% Füllstoff, bezogen auf das Gesamtgewicht der Folie.

Durch die Kombination des ausgewählten tertiären aliphatischen Amins mit Partikeln für die Deckschicht konnten überraschenderweise die Entstapelbarkeit und die Antistatik der Folie wesentlich verbessert werden. Diese Funktionen spielen eine wichtige Rolle bei der Verwendung der erfindungsgemäßen Folie als Etikett.

Überraschenderweise wird durch die Modifizierung der Deckschicht mit den genannten Additiven das optische Erscheinungsbild der Folie nicht beeinträchtigt, d. h. die Folie weist trotz der enthaltenen Füllstoffe hervorragende Glanzwerte auf. Die Folie weist unerwartet trotz des hohen Gehalts an Partikeln in der Deckschicht sehr gute Siegeleigenschaften auf. Dies ist insbesondere überraschend, da es bekannt ist, daß der $CaCO_3$-Zusatz in der Basisschicht beim Streckprozeß zur Vakuolenbildung führt, d. h. die Struktur der Polymermatrix wird wesentlich verändert. Es wurde aber gefunden, daß die Siegelfähigkeit der Folie trotz füllstoffhaltiger Deckschicht unerwartet gut ist.

Überraschenderweise hat sich gezeigt, daß trotz des in die Deckschicht eingearbeiteten Füllstoffs die Folie nicht das von den unbeschichteten opaken Folien her bekannte "Auskreiden" zeigt. Es ist bekannt, daß einschichtige Folien, welche beispielsweise $CaCO_3$ in vergleichbaren Mengen enthalten, ohne Beschichtung der $CaCO_3$-haltigen Schicht mit der Zeit eine weiße Staubschicht aufweisen, welche aus der Folie durch abgesondertes $CaCO_3$ entsteht. Dieser Vorgang wird im allgemeinen als "Auskreiden" bezeichnet. Durch diese Absonderungen werden auch Walzen, z. B. bei der Produktion oder der Verarbeitung der Folie, kontaminiert. Es war völlig unerwartet, daß diesbezüglich bei der erfindungsgemäßen Folie keine Probleme auftreten.

Zur Verbesserung der Hafteigenschaften der Deckschicht/en können die Oberflächen der Folie corona- oder flammbehandelt werden, wobei gegebenenfalls die entsprechende Behandlung einer Oberfläche ausreicht. Insbesondere ist es bevorzugt, daß nur eine Deckschicht corona- oder flammbehandelt wird.

Die erfindungsgemäße Folie ist mindestens zweischichtig und umfaßt als wesentliche Schichten immer die Kernschicht K und mindestens eine Deckschicht D mit der erfindungsgemäßen Additivkombination. Die Wahl der Anzahl der Schichten hängt von dem vorgesehenen Einsatzzweck ab, wobei dreischichtige Ausführungsformen besonders bevorzugt sind.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 10 bis 120 µm, wobei 30 bis 100 µm, insbesondere 40 bis 100 µm, bevorzugt sind.

Die Mehrschichtfolie weist mindestens eine, bevorzugt beidseitige Deckschicht/en auf. Beidseitig aufgebrachte Deckschichten können nach ihrem Aufbau, ihrer Zusammensetzung und nach ihrer Dicke gleich oder verschieden sein.

Die Deckschicht/en weist/weisen im allgemeinen eine Dicke von 0,5 bis 5 μm, vorzugsweise 0,5 bis 3 μm, auf. Besonders vorteilhaft sind Deckschichtdicken im Bereich von 0,7 bis 1,5 μm.

Die Dicke der Basisschicht beträgt 8 bis 120 μm, opake Ausführungsformen sind bevorzugt 20 bis 100 μm dick.

Um bestimmte Eigenschaften der erfindungsgemäßen Polypropylenfolie noch weiter zu verbessern, können die Kernschicht und die Deckschicht/en neben der beschriebenen erfindungswesentlichen Additivkombination weitere Zusätze, welche die wesentlichen Folieneigenschaften nicht beeinträchtigen, in einer jeweils wirksamen Menge enthalten, vorzugsweise Gleitmittel und/oder Stabilisatoren und/oder Neutralisationsmittel, die mit den Polymeren der Kernschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der ZuSatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2/s$.

Als Stabilisatoren können die üblichen stabilisierend wirkenden Verbindungen für Ethylen-, Propylen- und andere α-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 μm, einer absoluten Teilchengröße von kleiner 10 μm und einer spezifischen Oberfläche von mindestens 40 $m^2/g$.

Die Erfindung betrifft weiterhin ein Verfahren zur Herstellung der erfindungsgemäßen opaken Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 120 bis 170 °C, vorzugsweise 140 bis 160 °C, gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 150 °C, vorzugsweise im Bereich von 110 bis 140 °C, und die Querstreckung bei einer Temperatur größer 140 °C, vorzugsweise bei 145 bis 180 °C, durchgeführt. Die Folie wird auf die notwendige Strecktemperatur mittels eines Luftheizkastens gebracht.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh-

oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Bei der Flammbehandlung wird die Folie über eine Kühlwalze geführt, oberhalb derer ein Gasbrenner angeordnet ist. Die Folie wird durch eine Nipwalze satt auf die Kühlwalze gepreßt. Das aus dem Brenner ausströmende Gas wird entzündet und bildet etwa 5 bis 10 mm große Flammen. Der oxydierende Teil der Flamme trifft dabei auf der Folienoberfläche auf und sorgt für eine Erhöhung der Oberflächenenergie der Folie. Sie liegt auch hier im üblichen Rahmen.

Die erfindungsgemäße opake Mehrschichtfolie besitzt eine Kombination von Eigenschaften, die sie in besonders hohem Maße geeignet macht für ihren bestimmungsgemäßen Verwendungszweck als Etikettenfolie oder als Einschlagfolie für schnellaufende Einschlagmaschinen. Sie zeichnet sich durch eine hervorragende Entstapelbarkeit aus und weist all die Eigenschaften auf, die von Polypropylen-Verpackungsfolien im Hinblick auf deren optische Erscheinung gefordert werden.

Zusammenfassend ist festzustellen, daß sich die erfindungsgemäße opake Mehrschichtfolie durch eine Vielzahl vorteilhafter Eigenschaften auszeichnet, insbesondere durch

- hervorragende Entstapelbarkeit,
- eine ausgezeichnete Antistatik,
- einen hohen Glanz,
- eine homogene Folienoptik,
- gute ein- bzw. beidseitige Siegeleigenschaften,
- eine gute Oberflächenbehandelbarkeit,
- gute Sofort- und Langzeitbedruckbarkeit,
- eine hohe Kratzfestigkeit beider Oberflächenschichten,
- kein Auskreiden bei füllstoffhaltiger Deckschicht.

Die Erfindung wird durch die nachfolgenden Beispiele näher erläutert:

**Beispiel 1**

Es wurde eine dreischichtige symmetrische Folie (Aufbau der Schichten: DKD) hergestellt, wobei folgende Produktionsparameter eingehalten wurden:

| | Extrusionstemperatur |
|---|---|
| Kernschicht K | 265 °C |
| Deckschichten D | 265 °C |

Mittels einer Dreischichtdüse wurde eine dreischichtige Vorfolie mit einem symmetrischen Schichtaufbau DKD extrudiert. Diese Vorfolie wurde auf einer Kühlwalze (Temperatur der Kühlwalze: 30 °C) abgekühlt. Anschließend erfolgte die Streckung zunächst in Längs- ($\lambda_1$ = 5,5:1; T = 130 °C) und dann in Querrichtung ($\lambda_q$ = 9:1; T = 160 °C, Konvergenz: 15 %). Die Maschinengeschwindigkeit betrug ca. 210 m/min.

Die Folie hatte folgenden Aufbau:

Kernschicht K:

| | |
|---|---|
| 87,88 Gew.-% | Propylenhomopolymerisat mit einem Schmelzflußindex von 4 g/10 min (230 °C, 21,6 N) |
| 12 Gew.-% | Calciumcarbonat mit einem mittleren Teilchendurchmesser von 3,5 µm |
| 0,12 Gew.-% | N,N-bis-ethoxyalkylamin (Antistatikum; Armostat® 300, AKZO, Düren, DE) |

Das Calciumcarbonat wurde über ein Masterbatch (30 Gew.-% PP, 70 Gew.-% $CaCO_3$; ®Multibase 7012 A, OMYA, Köln, DE) eingesetzt.

Deckschichten D:

| | |
|---|---|
| 94,5 Gew.-% | Ethylen-Propylen-Copolymerisat mit einem $C_2$-Gehalt von 4 %, einem Schmelzflußindex von 12 g/10 min (230 °C, 21,6 N) und einem Abbaufaktor von 8 |

5 Gew.-% Calciumcarbonat mit einem mittleren Teilchendurchmesser von 3,5 µm
0,5 Gew.-% N,N-bis-ethoxyalkylamin (®Armostat 600) der Formel I

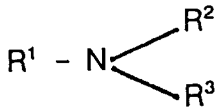

worin

$R^1$ 55 bis 65 % $C_{18}H_{35}$
30 bis 40 % $C_{16}H_{31}$
0 bis 5 % $C_{14}H_{27}$
0 bis 1 % $C_{12}H_{23}$

bedeutet und worin

$R^2$ $CH_2$-$CH_2OH$ und
$R^3$ $CH_2CH_2OH$

bedeuten.

| | |
|---|---|
| Dicke der Folie: | 80 µm |
| Dicke von Schicht K: | 78 µm |
| Dicke der Deckschichten D: | 1 µm |

Eine Deckschicht wurde mit 41 mN/m coronabehandelt. Die Folie hat die in der Tabelle genannten erfindungsgemäßen Eigenschaften.

**Beispiel 2**

Es wurde eine Dreischichtfolie gemäß Beispiel 1 hergestellt, wobei jedoch eine der beiden Deckschichten D kein $CaCO_3$ enthielt.

**Beispiel 3**

Es wurde eine Dreischichtfolie gemäß Beispiel 1 hergestellt, wobei jedoch eine der beiden Deckschichten D kein Antistatikum und kein $CaCO_3$ enthielt.

**Beispiel 4**

Es wurde eine Dreischichtfolie gemäß Beispiel 1 hergestellt, wobei jedoch in der Deckschicht anstelle des Amins der Formel I gemäß Beispiel 1 ein N,N-bis(hydroxyethyl)oleylamin (®Armostat 1800) in einer Menge von 0,5 Gew.-% eingesetzt wurde.

**Vergleichsbeispiel 1**

Es wurde eine Dreischichtfolie gemäß Beispiel 1 hergestellt, wobei jedoch in der Deckschicht anstelle eines Amins der Formel I gemäß Beispiel 1 ein nicht hydriertes N,N-bis(hydroxyethyl)alkylamin (®Armostat 300) eingesetzt wurde, worin der Alkylrest ungesättigte aliphatische Reste mit 18 bis 12 C-Atomen bedeutet.

**Vergleichsbeispiel 2**

Es wurde eine Dreischichtfolie gemäß Beispiel 1 hergestellt, jedoch enthielten beide Deckschichten kein Amin.

**Vergleichsbeispiel 3**

Es wurde eine Dreischichtfolie gemäß Beispiel 1 hergestellt, jedoch enthielten beide Deckschichten kein $CaCO_3$.

Zur Charakterisierung der Rohstoffe und der Folien wurden die folgenden Meß-methoden benutzt:

Schmelzflußindex (MFI)

DIN 53 735 bei 21,6 N Belastung und 230 °C.

Schmelzpunkt

DSC-Messung, Maximum der Schmelzkurve, Aufheizgeschwindigkeit 20 °C/min.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farbe abgelöst werden, so wurde die Farbhaftung mit mäßig und bei deutlicher Farbablösung mit schlecht beurteilt.

Opazität und Weißgrad

Die Bestimmung der Opazität und des Weißgrades erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53 146 bestimmt. Der Weißgrad wird als $WG = RY + 3RZ - 3RX$ definiert. WG = Weißgrad; RY, RZ, RX = entsprechende Reflexionsfaktoren bei Einsatz des Y-, Z- und X-Farbmeßfilters. Als Weißstandard wird ein Preßling aus Bariumsulfat (DIN 5033, Teil 9) verwendet. Ein Folienmuster (Größe DIN A4) wird in einer Vorrichtung vom Typ Suntest CPS der Firma Heraeus, Hanau (DE), mehrere Tage bestrahlt, Bestrahlungsstärke 765 $W/m^2$, und anschließend mit unbewaffnetem Auge mit einem nicht bestrahlten Muster verglichen.

Auskreiden

8 000 m Folie werden an einem Rollenschneider Monoslit der Firma Goebel mit 400 m/min geschnitten. Die Luft am Schnittmesser wird abgesaugt und durch einen Filter geleitet. Die Gewichtszunahme des Filters wird bestimmt.

Entstapelbarkeit

Geschnittene Bögen von 700 x 1 000 mm werden auf einer Offsetdruckmaschine der Firma Heidelberger eingezogen und bedruckt (Taktrate 60 Bögen/min). Die Zahl der Abzugfehler je 100 Bögen wird als Maß für die Entstapelbarkeit genommen.

Oberflächenwiderstand

Der Oberflächenwiderstand wurde nach DIN/Entwurf 57 303 Teil 14 gemessen und in Ohm angegeben.

Siegelnahtfestigkeit

Zur Bestimmung wurden zwei 15 mm breite Folienstreifen übereinandergelegt und bei 130 °C, einer Siegelzeit von 0,5 s und einem Siegeldruck von 10 $N/mm^2$ (Gerät: Brugger Typ NDS, einseitig beheizte Siegelbacke) versiegelt. Die Siegelnahtfestigkeit wurde nach der T-Peel-Methode bestimmt und in N angegeben.

Rauhigkeit

Die Rauhigkeit wurde in Anlehnung an DIN 4768 bestimmt.

TABELLE

| Beispiele | Entstapelbarkeit | Oberflächenwiderstand | Auskreiden | Siegelfähigkeit |
|---|---|---|---|---|
| Beispiel 1 | <1 | $4{,}5 \cdot 10^{10}$ | 0,3 | 1,6 |
| Beispiel 2 | 2-3 | $5 \cdot 10^{10}$ | 0,4 | 1,6 |
| Beispiel 3 | 2-3 | $1 \cdot 10^{11}$ | 0,3 | 1,6 |
| Beispiel 4 | <1 | $5 \cdot 10^{10}$ | 0,3 | 1,6 |
| Vergleichsbeispiel 1 | 7-10 | $2 \cdot 10^{13}$ | 0,4 | 1,6 |
| Vergleichsbeispiel 2 | 7-10 | $1 \cdot 10^{15}$ | 0,3 | 1,6 |
| Vergleichsbeispiel 3 | >50 d. h. nicht entstapelbar | $1{,}5 \cdot 10^{11}$ | 0,4 | 1,6 |

## Patentansprüche

1. Coextrudierte, biaxial orientierte, opake Folien, umfassend eine Basisschicht, die Polypropylen enthält und mindestens eine Deckschicht, enthaltend olefinische Polymere, dadurch gekennzeichnet, daß die Deckschicht 4-8 Gew.-% bezogen auf das Gewicht der Deckschicht anorganische und/oder organische Partikel und tertiäres aliphatisches Amin der Formel I

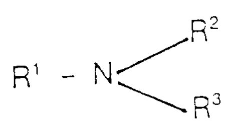

worin,

| | |
|---|---|
| $R^1$ | einen ungesättigten, aliphatischen Rest mit mindestens 18 C-Atomen oder einen gesättigten Alkylrest mit 8-26 C-Atomen bedeutet und |
| $R^2$ und $R^3$ | identisch oder verschieden sind und $R^4$-$CH_2OH$ bedeuten, worin $R^4$ einen gesättigten $C_1$-$C_6$-Alkylrest bedeutet, |

enthält.

2. Opake Folie nach Anspruch 1 dadurch gekennzeichnet, daß die anorganischen und/oder organischen Partikel eine mittlere Teilchengröße von 2-5 µm haben.

3. Opake Folie nach Anspruch 1 und/oder 2 dadurch gekennzeichnet, daß die Deckschicht 0,05 bis 2 Gew.-% tertiäres aliphatisches Amin der Formel I enthält.

4. Opake Folie nach einem oder mehreren der Ansprüche 1 bis 3 dadurch gekennzeichnet, daß $R^1$ einen ungesättigten aliphatischen Rest mit 18-30 C-Atomen bedeutet.

5. Opake Folie nach einem oder mehreren der Ansprüche 1 bis 4 dadurch gekennzeichnet, daß $R^1$ einen gesättigten Alkyrest mit 12-18 C-Atomen bedeutet.

6. Opake Folie nach einem oder mehreren der Ansprüche 1 bis 5 dadurch gekennzeichnet, daß die Basisschicht 3-20 Gew.- % Füllstoffe bezogen auf das Gewicht der Basisschicht enthält.

7. Opake Folie nach einem oder mehreren der Ansprüche 1 bis 6 dadurch gekennzeichnet, daß die Basisschicht 10-15 Gew.-% Füllstoffe bezogen auf das Gewicht der Basisschicht enthält.

8. Opake Folie nach einem oder mehreren der Ansprüche 1 bis 7 dadurch gekennzeichnet, daß die Folie 5-25 Gew.-% anorganische und/oder organische Partikel und Füllstoffe enthält, wobei die Gewichtsangabe auf das Gesamtgewicht der Folie bezogen ist.

9. Opake Folie nach einem oder mehreren der Ansprüche 1 bis 8 dadurch gekennzeichnet, daß der Füllstoff der Basisschicht die gleiche Verbindung wie die anorganischen und/oder organischen Partikel der Deckschicht ist.

10. Opake Folie nach einem oder mehreren der Ansprüche 1 bis 9 dadurch gekennzeichnet, daß der Füllstoff der Basisschicht Calziumcarbonat und die Partikel in der Deckschicht Calziumcarbonat sind.

11. Opake Folie nach einem oder mehreren der Ansprüche 1 bis 10 dadurch gekennzeichnet, daß die Deckschicht eine Dicke von 0,5 bis 2 μm hat.

12. Opake Folie nach einem oder mehreren der Ansprüche 1 bis 11 dadurch gekennzeichnet, daß die Deckschicht siegelfähig ist.

13. Verwendung einer Mehrschichtfolie nach einem oder mehreren der Ansprüche 1 bis 12 zur Herstellung von In-Mould-Labelling-Etiketten.

14. Etikett dadurch gekennzeichnet, daß es eine Folie nach einem oder mehreren der Ansprüche 1 bis 12 enthält.

15. Verfahren zur Herstellung einer opaken Folie nach einem oder mehreren der Ansprüche 1 bis 12 bei dem man die den einzelnen Schichten der Folie entsprechenden Schmelzen durch eine Flachdüse coextrudiert die so erhaltene Folie zur Verfestigung abkühlt, die Folie biaxial streckt und thermofixiert und gegebenenfalls eine oder beide Oberflächen mittels Corona oder Flamme behandelt.

## Claims

1. Co-extruded biaxially orientated opaque film comprising a base layer containing polypropylene and at least one outer layer containing olefinic polymers, characterised in that the outer layer contains 4 to 8% by weight in relation to the weight of the outer layer of inorganic and/or organic particles and tertiary aliphatic amine of Formula I

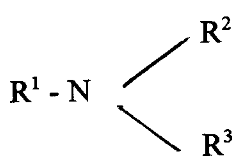

in which

$R^1$ is an unsaturated aliphatic radical with at least 18 carbon atoms or one saturated alkyl radical with 8 to 26 carbon atoms, and

$R^2$ and $R^3$ are identical or different and denote $R^4$-$CH_2OH$ in which $R^4$ denotes a saturated $C_1$-$C_6$ alkyl radical.

2. An opaque film according to claim 1, characterised in that the inorganic and/or organic particles have a mean particle size of 2 to 5 μm.

3. An opaque film according to claim 1 and/or 2, characterised in that the outer layer contains 0.05 to 2% by weight of tertiary aliphatic amine of Formula I.

4. An opaque film according to one or more of claims 1 to 3, characterised in that $R^1$ denotes an unsaturated aliphatic radical with 18 to 30 carbon atoms.

5. An opaque film according to one or more of claims 1 to 4, characterised in that $R^1$ denotes a saturated alkyl radical having 12 to 18 carbon atoms.

6. An opaque film according to one or more of claims 1 to 5, characterised in that the base layer contains 3 to 20% by weight of fillers in relation to the weight of the base layer.

7. An opaque film according to one or more of claims 1 to 6, characterised in that the base layer contains 10 to 15% by weight of fillers in relation to the weight of the base layer.

8. An opaque film according to one or more of claims 1 to 7, characterised in that the film contains 5 to 25% by weight of inorganic and/or organic particles and fillers, the weight indication being related to the total weight of the film.

9. An opaque film according to one or more of claims 1 to 8, characterised in that the filler of the base layer is the same compound as the inorganic and/or organic particles of the outer layer.

10. An opaque film according to one or more of claims 1 to 9, characterised in that the filler in the base layer is calcium carbonate while the particles in the outer layer are calcium carbonate.

11. An opaque film according to one or more of claims 1 to 10, characterised in that the outer layer has a thickness of 0.5 to 2 μm.

12. An opaque film according to one or more of claims 1 to 11, characterised in that the outer layer is sealable.

13. Use of a multi-layer film according to one or more of claims 1 to 12 in the production of in-mould labelling labels.

14. A label characterised in that it contains a film according to one or more of claims 1 to 12.

15. A method of producing an opaque film according to one or more of claims 1 to 12 in which the melts corresponding to the individual layers of the film are co-extruded through a flat nozzle, the resulting film is cooled to solidification, the film is biaxially stretched and heat set and possibly one or both surfaces is/are treated by corona or flame.

**Revendications**

1. Feuilles opaques coextrudées à orientation biaxiale, comprenant une couche de base qui contient du poly(propylène) et au moins une couche de recouvrement, contenant des polymères oléfiniques, caractérisées en ce que la couche de recouvrement contient 4 à 8% en poids, sur base du poids de la couche de recouvrement, de particules inorganiques et/ou organiques et une amine aliphatique tertiaire de formule I

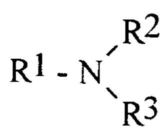

dans laquelle

$R^1$ signifie un radical aliphatique insaturé avec au moins 18 atomes de carbone ou un radical alkyle saturé avec 8 à 26 atomes de carbone, et

$R^2$ et $R^3$ sont identiques ou différents et signifient $R^4$-$CH_2OH$, dans laquelle $R^4$ signifie un radical alkyle saturé en $C_1$-$C_6$.

**2.** Feuille opaque suivant la revendication 1, caractérisée en ce que les particules inorganiques et/ou organiques ont une taille particulaire moyenne de 2 à 5 µm.

**3.** Feuille opaque suivant la revendication 1 et/ou 2, caractérisée en ce que la couche de recouvrement contient 0,05 à 2% en poids d'amine aliphatique tertiaire de formule I.

**4.** Feuille opaque suivant l'une ou plusieurs des revendications 1 à 3, caractérisée en ce que $R^1$ signifie un radical aliphatique insaturé avec 18 à 30 atomes de carbone.

**5.** Feuille opaque suivant l'une ou plusieurs des revendications 1 à 4, caractérisée en ce que $R^1$ signifie un radical alkyle saturé avec 12 à 18 atomes de carbone.

**6.** Feuille opaque suivant l'une ou plusieurs des revendications 1 à 5, caractérisée en ce que la couche de base contient 3 à 20% en poids de charges, sur base du poids de la couche de base.

**7.** Feuille opaque suivant l'une ou plusieurs des revendications 1 à 6, caractérisée en ce que la couche de base contient 10 à 15% en poids de charges, sur base du poids de la couche de base.

**8.** Feuille opaque suivant l'une ou plusieurs des revendications 1 à 7, caractérisée en ce que la feuille contient 5 à 25% en poids de particules et de charges inorganiques et/ou organiques, les données en poids se basant sur le poids total de la feuille.

**9.** Feuille opaque suivant l'une ou plusieurs des revendications 1 à 8, caractérisée en ce que la charge de la couche de base est le même composé que les particules inorganiques et/ou organiques de la couche de recouvrement.

**10.** Feuille opaque suivant l'une ou plusieurs des revendications 1 à 9, caractérisée en ce que la charge de la couche de base est du carbonate de calcium et que la particule dans la couche de recouvrement est du carbonate de calcium.

**11.** Feuille opaque suivant l'une ou plusieurs des revendications 1 à 10, caractérisée en ce que la couche de recouvrement a une épaisseur de 0,5 à 2 µm.

**12.** Feuille opaque suivant l'une ou plusieurs des revendications 1 à 11, caractérisée en ce que la couche de recouvrement est scellable.

**13.** Utilisation d'une feuille multicouche suivant l'une ou plusieurs des revendications 1 à 12 pour la préparation d'étiquettes In-Mould-Labelling.

**14.** Etiquette, caractérisée en ce qu'elle contient une feuille suivant l'une ou plusieurs des revendications 1 à 12.

**15.** Procédé de préparation d'une feuille opaque suivant l'une ou plusieurs des revendications 1 à 12, dans lequel on coextrude par une filière pour feuilles les masses en fusion correspondant aux couches isolées de la feuille, en ce qu'on refroidit la feuille ainsi obtenue pour solidification, en ce que l'on étire la feuille de manière biaxiale et en ce qu'On la thermofixe et, le cas échéant, en ce qu'on traite une ou les deux surfaces à la flamme ou par corona.